# EUROPÄISCHE PATENTANMELDUNG

(11) **EP 3 521 751 A1**
(43) Veröffentlichungstag der Anmeldung: **07.08.2019**
(21) Anmeldenummer: 18154667.2
(22) Anmeldetag: 01.02.2018
(51) Int. Cl.: G01B 11/24, G01N 21/88, B21C 51/00, B22D 11/12

(54) **VORRICHTUNG UND VERFAHREN ZUR IDENTIFIKATION VON EQUIPMENT IN METALLURGISCHEN INDUSTRIEANLAGEN**

(71) Anmelder: Primetals Technologies Austria GmbH, 4031 Linz (AT)
(72) Erfinder: Fischer, Paul, 4040 Linz (AT); Hartl, Franz, 4720 Kallham (AT); Kuehas, Thomas, 4225 Luftenberg (AT); Rohrhofer, Andreas, 4020 Linz (AT); Voglmayr, Bernhard, 4020 Linz (AT)
(74) Vertreter: Metals@Linz

(57) **Zusammenfassung**

Die Erfindung betrifft das Gebiet der metallurgischen Industrieanlagen. Die Aufgabe der vorliegenden Erfindung besteht somit darin, eine zuverlässige Identifikation von Equipment, in einer metallurgischen Industrieanlage, zur Verfügung zu stellen, welche unempfindlich gegen die rauen Umgebungsbedingungen ist.

Die Aufgabe wird durch eine Vorrichtung und Verfahren zur Identifizierung von Equipment gelöst. Das Equipment weist eine dreidimensionale Identifizierungsmarke (10), insbesondere eine Lochplatte oder eine Platte mit dreidimensionalen Mustern, auf. Ein dreidimensionales Kamerasystem (1), erfasst das Equipment (13) mit der dreidimensionalen Identifizierungsmarke (10) und eine Auswerteeinheit (2) identifiziert das Equipment (11) eindeutig anhand der erfassten dreidimensionalen Identifizierungsmarke (10).

## Beschreibung

### Gebiet der Technik

Die vorliegende Erfindung betrifft das Gebiet der metallurgischen Industrieanlagen.

Einerseits betrifft die Erfindung eine Vorrichtung zur Identifizierung von Equipment, insbesondere metallurgischer Gefäße, in einer metallurgischen Industrieanlage.

Andrerseits betrifft die Erfindung ein Verfahren zur Identifikation von Equipment, insbesondere metallurgischer Gefäße, in einer metallurgischen Industrieanlage.

### Stand der Technik

In metallurgischen Industrieanlagen ist viel Equipment im Einsatz, welches von einem Ort an einen anderen Ort in der metallurgischen Industrieanlage transportiert wird. Dieses Equipment ist beispielsweise ein metallurgisches Gefäß, um Roheisenschmelzen, Stahlschmelzen, flüssige Schlacken, Schrott und dergleichen zu transportieren. Um in der metallurgischen Industrieanlage Abläufe logistisch optimal zu gestalten, sollte das Equipment möglichst gut nachverfolgt werden. Die Nachverfolgung von Equipment ermöglicht es, einem Kranfahrer oder Anlagenbediener stets das richtige Equipment an den gewünschten Ort zu bringen.
Für eine Identifizierung von Equipment ist beispielsweise die WO2016119925A1 bekannt, welche Transponder an dem Equipment anbringt. Bei den Transpondern handelt es sich um SAW - oder RFID - Transponder. Ein Nachteil dieser Transponder ist, dass diese für Temperaturen über 400°C, wenn beispielsweise eine längere Behandlungsdauer in einer Vakuumanlage erfolgt, nicht geeignet sind. Es herrschen in einer metallurgischen Industrieanlage auch raue Umgebungsbedingungen wie hohe Temperaturschwankungen, hohe Staubbelastungen, hohe mechanische Beanspruchung durch Wärmedehnungen und viele andere.

### Zusammenfassung der Erfindung

Die Aufgabe der vorliegenden Erfindung besteht somit darin, eine zuverlässige Identifikation von Equipment, in einer metallurgischen Industrieanlage, zur Verfügung zu stellen, welche unempfindlich gegen die rauen Umgebungsbedingungen ist.

Die Aufgabe wird durch eine dreidimensionale Identifizierungsmarke - insbesondere eine Lochplatte oder eine Platte mit dreidimensionalem Muster - und durch ein dreidimensionales Kamerasystem, welches geeignet ist das Equipment mit der dreidimensionalen Identifizierungsmarke zu erfassen, gelöst.
Eine Auswerteeinheit sorgt dafür, dass anhand des erfassten Equipments mit der dreidimensionalen Identifizierungsmarke das Equipment eindeutig identifiziert wird. Die dreidimensionale Identifizierungsmarke kann binär codiert sein, beispielsweise in dem eine Platte in mehrere Abschnitte unterteilt ist und die einzelnen Abschnitte entweder ein bestimmtes dreidimensionales Muster aufweisen, was jeweils für die binäre Eins steht, oder der jeweilige Abschnitt keine Muster aufweist, also glatt ist, was die binäre Null darstellt. Es ist natürlich auch denkbar, dass jeder Abschnitt mehrere unterschiedliche Muster aufweisen kann. Das dreidimensionale Muster kann ein Loch oder eine dreidimensionale Erhöhung sein, wie zum Beispiel Arabische oder Römische Ziffern. Das dreidimensionale Kamerasystem kann das Equipment mit der dreidimensionalen Identifizierungsmarke als eine sogenannte Szene erfassen. Eine nachfolgende Auswerteeinheit kann dann die Szene auswerten und die dreidimensionale Identifizierungsmarke erkennen und anhand der dreidimensionalen Identifizierungsmarke das Equipment eindeutig zuordnen. Durch die Verwendung einer dreidimensionalen Kamera kann Equipment auch dann noch erfasst werden, wenn dieses hohen Temperaturen ausgesetzt ist oder war. Weiters ist das Erfassen, unabhängig von der Temperatur des Equipments, immer möglich - also bei kalten als auch bei warmen Temperaturen. Die dreidimensionale Identifizierungsmarke wird auch so ausgeführt, dass sie sehr robust gegen Stöße und unempfindlich gegen Staubablagerungen ist. Die Installation eines solchen Kamerasystems ist sehr einfach. Die dreidimensionale Identifizierungsmarke muss am Equipment an einem für das dreidimensionale Kamerasystem erfassbaren Bereich angebracht werden. Die Auswerteeinheit gibt eine Fehlermeldung aus, wenn keine dreidimensionale Identifizierungsmarke am Equipment erkannt wird. Die Auswerteeinheit kann in ein übergeordnetes Automatisierungs- bzw. Leitsystem integriert werden.

Eine besonders bevorzugte Ausführungsform sieht vor, dass das dreidimensionale Kamerasystem eine Time of Flight (TOF) Kamera mit einem Photonic Mixing Device (PMD) Sensor ist. Der PMD Sensor ist in der Lage das Equipment und die dreidimensionale Identifizierungsmarke in räumlichen Dimensionen präzise zu erfassen. Eine TOF Kamera mit einem PMD Sensor ist sehr robust, verschleißfrei und wartungsarm. Die besondere Arbeitsweise der TOF Kamera mit dem PMD Sensor gewährleistet ein zuverlässiges Erfassen der dreidimensionalen Identifizierungsmarke auch bei Dunkelheit oder externer Lichteinstrahlung, beispielsweise durch die Sonneneinstrahlung.

Eine vorteilhafte Ausführungsform sieht vor, dass das dreidimensionale Kamerasystem in einem Schutzgehäuse untergebracht ist. In einer metallurgischen Industrieanlagen herrschen sehr raue Bedingungen mit wechselnden Temperaturen und hoher Staubbelastung. Durch das Schutzgehäuse für das dreidimensionalen Kamerasystems ist ein sicherer und störungsfreier Betrieb der Identifizierung des Equipments gewährleistet.

Die erfindungsgemäße Aufgabe wird durch das eingangsgenannte Verfahren gelöst.
Das Equipment mit einer dreidimensionale Identifizierungsmarke, insbesondere eine Lochplatte oder eine Platte mit dreidimensionalen Mustern, wird durch ein dreidimensionales Kamerasystem erfasst. Eine Zuordnung von dreidimensionaler Identifizierungsmarke und Equipment ist in einer Auswerteeinheit abgespeichert. Durch die Auswerteeinheit wird die dreidimensionale Identifizierungsmarke erkannt. Die Auswerteeinheit bestimmt anhand der dreidimensionalen Identifizierungsmarke das Equipment.

Durch dieses Verfahren ist es möglich das Equipment jederzeit und unabhängig von etwaigen Temperaturen zu erkennen. Die dreidimensionale Identifizierungsmarke ist sehr robust gegenüber den rauen Bedingungen in einer metallurgischen Industrieanlage. Diese dreidimensionale Identifizierungsmarke ist unempfindlich gegenüber Stößen, Temperaturschwankungen und Staub. Das dreidimensionale Kamerasystem kann unabhängig von etwaigen dreidimensionalen Identifizierungsmarken installiert werden. Es ist beispielsweise denkbar, dass sich die Identifizierungsmarken im Laufe der Zeit ändern. Die geänderten dreidimensionalen Identifizierungsmarken müssen dann nur in der Auswerteeinheit abgespeichert werden und entsprechend dem Equipment zugeordnet werden. Die Kombination von dreidimensionaler Identifizierungsmarke und dreidimensionalem Kamerasystem ermöglicht es, dass Equipment zuverlässig identifiziert werden kann - unabhängig von Lichtverhältnissen und etwaiger Bewegung des Equipments. Die Inbetriebnahme eines solchen Verfahrens ist sehr einfach und erfordert keine besonderen Kenntnisse. Es muss auch nicht beachtet werden, die dreidimensionalen Identifizierungsmarken möglichst an Orten mit geringer oder hoher Wärmeeinstrahlung anzubringen.

Eine vorteilhafte Ausführungsform sieht vor, dass das dreidimensionale Kamerasystem das Equipment erfasst und die Auswerteeinheit den Typ des Equipment bestimmt.
Unter Typ wird hierbei verstanden, ob es sich beispielsweise um eine Pfanne, einen Schlackekübel, einen Verteiler oder eine Schrottschurre handelt. Dies hat den Vorteil, dass immer überprüft werden kann, ob das aufgrund der erfassten dreidimensionalen Identifizierungsmarke bestimmte Equipment und der erkannte Typ übereinstimmen. Sollte ein in der Auswerteeinheit hinterlegter Typ, welcher sich durch die erfasste dreidimensionale Identifizierungsmarke ergibt, mit dem erkannten Typ nicht übereinstimmen, wird eine Fehlermeldung ausgegeben.

Eine weitere bevorzugte Ausführungsform sieht vor, dass durch ein entsprechend positioniertes dreidimensionales Kamerasystem und die Auswerteeinheit ein Beladungszustand des Equipments erkannt wird. Es kann beispielsweise erkannt werden, ob das Equipment teilweise gefüllt ist, leer ist oder voll ist. Diese Information kann dann ebenfalls mit der in der Auswerteeinheit hinterlegten Information abgeglichen werden. Sollte der Vergleich von erfasstem Beladungszustand und in der Auswerteeinheit hinterlegtem Beladungszustand nicht übereinstimmen, kann ebenfalls eine Fehlermeldung ausgegeben werden. Diese Ausführung verbessert die Zuverlässigkeit der Identifikation von Equipment gegenüber anderen bekannten Methoden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
Fig. 1 zeigt eine schematische Darstellung einer erfindungsgemäßen Vorrichtung zum Identifizieren von Equipment.
Fig. 2a-2f zeigen mögliche Ausführungsformen von dreidimensionalen Identifizierungsmarken.

### Beschreibung der Ausführungsformen

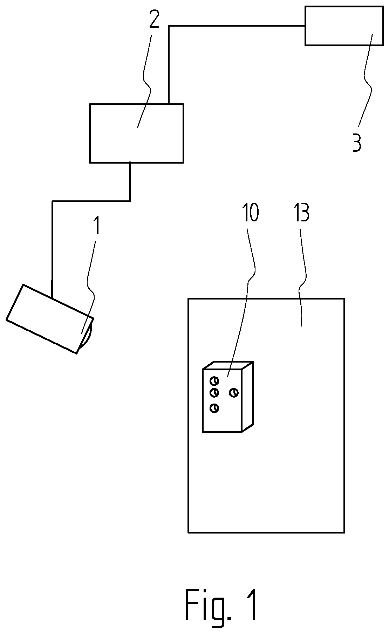

In Figur 1 sind schematisch die Komponenten einer erfindungsgemäßen Vorrichtung zum Identifizieren von Equipment dargestellt. Eine dreidimensionale Kamera 1 erfasst Equipment 13, welches eine dreidimensionale Identifizierungsmarke 10 aufweist. Die von der dreidimensionalen Kamera 1 erfassten Szenen werden an eine Auswerteeinheit weitergeleitet, welche die dreidimensionale Identifizierungsmarke auf den erfassten Szenen erkennt und danach das Equipment anhand der dreidimensionalen Identifizierungsmarke bestimmen kann. Des Weiteren kann die Auswerteeinheit in einer bevorzugten Ausführungsform auch die Art des erfassten Equipments identifizieren. Es kann durch eine derartige dreidimensionale Kamera 1 erkannt werden, ob es sich um eine Pfanne, einen Schlackekübel, eine Schrottschurre oder ähnliches handelt. Es ist auch möglich zu erkennen, ob das jeweilige Equipment 13 beladen oder unbeladen ist. Alle Informationen, welche durch die Auswerteeinheit 2 ermittelt werden, können dann an ein übergeordnetes Leitsystem 3 weitergeleitet werden. Das Leitsystem 3 speichert und / oder übermittelt die jeweiligen Informationen innerhalb und / oder außerhalb der metallurgischen Industrieanlage.

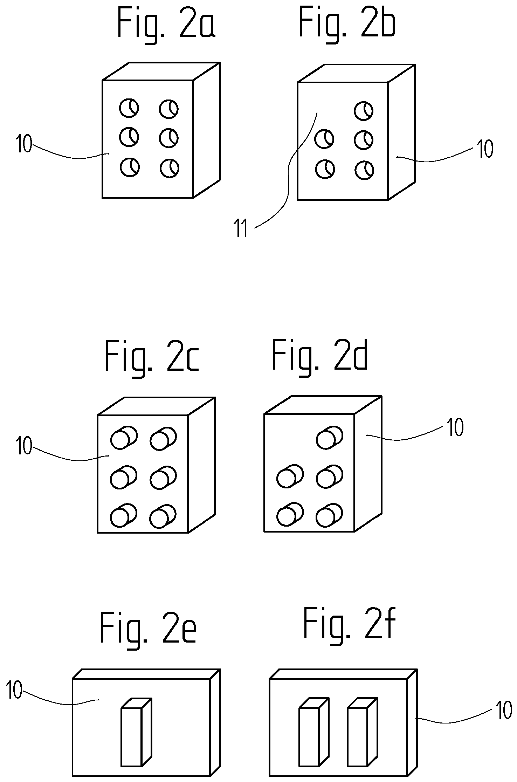

In den Figuren 2a bis 2f sind verschiedenste Formen der dreidimensionalen Identifizierungsmarken 10 dargestellt. In Figur 2a weist die dreidimensionale Identifizierungsmarke 10 Bohrungen auf. Die dreidimensionale Identifizierungsmarke 10 ist in sechs verschiedene Abschnitte 11 unterteilt. Die Kodierung kann, wie in Figur 2a dargestellt, binär erfolgen, wobei eine Bohrung für eine logische Eins steht und keine Bohrung für die logische Null. In der Figur 2a sind alle sechs Abschnitte mit Bohrungen versehen - somit ergibt sich bei sechs Bits die Zahl 63. In Figur 2b ist im Abschnitt 11 keine Bohrung vorhanden. Der Abschnitt 11 ist das höchstwertigste Bit, womit sich durch die Nichtbelegung des hochwertigsten Bits die Zahl 31 ergibt. In der Figur 2c und Figur 2d stehen zylindrische Körper von einer Platte ab, was für die logische Eins steht. Wenn keine zylindrischen Körper abstehen wird die logische Null abgebildet. Die Kodierung kann analog - wie in Figur 2a beschrieben - erfolgen. In Figur 2e und Figur 2f wird die dreidimensionale Identifizierungsmarke derart ausgebildet, dass Zeichen - im speziellen Fall römische Ziffern - verwendet werden. Es ist aber auch denkbar arabische Ziffern oder einfach andere dreidimensionale Muster zu verwenden. Diese Ziffern oder Muster werden dann in der Auswerteeinheit entsprechend zugeordnet, damit es möglich ist das Equipment zuzuordnen. Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Dreidimensionale Kamera
- 2: Auswerteeinheit
- 3: Leitsystem
- 10: Dreidimensionale Identifizierungsmarke
- 11: Abschnitt
- 13: Equipment

## Patentansprüche

1. Vorrichtung zur Identifizierung von Equipment (13), insbesondere metallurgischer Gefäße, in einer metallurgischen Industrieanlage umfassend eine am Equipment (13) angebrachte Identifizierungsmarke, eine Empfangsvorrichtung und eine Auswerteeinheit, welche anhand der Identifizierungsmarke das Equipment (13) erkennt, **dadurch gekennzeichnet, dass**
- die Identifizierungsmarke eine dreidimensionale Identifizierungsmarke (10), insbesondere eine Lochplatte oder eine Platte mit dreidimensionalen Mustern, ist,
- die Empfangsvorrichtung ein dreidimensionales Kamerasystem (1) ist, welches geeignet ist, das Equipment (13) mit der dreidimensionalen Identifizierungsmarke (10) zu erfassen,
- eine Auswerteeinheit (2), die geeignet ist anhand des erfassten Equipments (13) mit der dreidimensionalen Identifizierungsmarke (10) das Equipment (11) eindeutig zu identifizieren.

2. Vorrichtung zur Identifizierung von Equipment nach Anspruch 2, **dadurch gekennzeichnet, dass** das dreidimensionale Kamerasystem (1) eine TOF Kamera mit einem PMD Sensor ist.

3. Vorrichtung zur Identifizierung von Equipment nach Anspruch 1 oder 2, **dadurch gekennzeichnet, dass** das dreidimensionale Kamerasystem (1) in einem Schutzgehäuse untergebracht ist.

4. Verfahren zur Identifikation von Equipment, insbesondere metallurgischer Gefäße, in einer metallurgischen Industrieanlage, **dadurch gekennzeichnet, dass**
- das Equipment (13) eine dreidimensionale Identifizierungsmarke (10), insbesondere eine Lochplatte oder eine Platte mit dreidimensionalen Mustern, aufweist und das Equipment (13) mit der dreidimensionale Identifizierungsmarke durch ein dreidimensionales Kamerasystem (1) erfasst wird,
- eine Zuordnung von dreidimensionaler Identifizierungsmarke (10) und Equipment (13) in einer Auswerteeinheit (2) abgespeichert ist
- durch die Auswerteeinheit (2) die dreidimensionale Identifizierungsmarke (10) erkannt wird,
- die Auswerteeinheit (2) anhand der dreidimensionalen Identifizierungsmarke (10) das Equipment (13) identifiziert.

5. Verfahren zur Identifikation von Equipment nach Anspruch 4, **dadurch gekennzeichnet, dass** durch das dreidimensionale Kamerasystem (1) das Equipment erfasst wird und die Auswerteeinheit (2) einen Typ des Equipment (13) bestimmt.

6. Verfahren zur Identifikation von Equipment nach Anspruch 4 oder 5, **dadurch gekennzeichnet, dass** durch das dreidimensionale Kamerasystem (1) und die Auswerteeinheit (2) ein Beladungszustand des Equipments (13) erfasst wird.
